# EUROPÄISCHE PATENTSCHRIFT

(11) **EP 0 799 393 B1**
(45) Veröffentlichungstag und Bekanntmachung des Hinweises auf die Patenterteilung: **08.07.1998**
(21) Anmeldenummer: 95942042.3
(22) Anmeldetag: 20.12.1995
(51) Int. Cl.: F16K 15/02

(54) **VENTILANORDNUNG, INSBESONDERE FÜR PNEUMATISCHE STEUERUNGEN**
VALVE ARRANGEMENT, IN PARTICULAR FOR PNEUMATIC CONTROL SYSTEMS
SYSTEME DE SOUPAPES, NOTAMMENT POUR COMMANDES PNEUMATIQUES

(30) Priorität: 21.12.1994 DE 4445686
(43) Veröffentlichungstag der Anmeldung: 08.10.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: LISEC, Thomas, D-10407 Berlin (DE); WAGNER, Bernd, D-14199 Berlin (DE); KREUTZER, Martin, D-10715 Berlin (DE)
(86) Internationale Anmeldenummer: DE9501852
(87) Internationale Veröffentlichungsnummer: WO9619689

(56) Entgegenhaltungen:
- WO-A-94/04832
- DE-A- 2 043 428
- FR-A- 2 081 016
- FR-A- 2 639 085
- GB-A- 2 155 152

## Beschreibung

Die Erfindung betrifft eine Ventilanordnung, insbesondere für pneumatische Steuerungen.

Pneumatische Steuerungen sind aufgrund ihrer Leistungskraft, :Robustheit und hohen Lebensdauer weit verbreitet. Im einfachsten Fall wird über einen elektropneumatischen Wandler (Pilotventil) mit Druckluft als Druckmittel ein pneumatisches Stellelement (Kolben, Membran) betätigt, das seinerseits einen Gas- oder Flüssigkeitsstrom manipuliert. Alle Stellelemente weisen eine mehr oder weniger große Leckrate auf. Ein Pilotventil muß daher bei entsprechender Energiezufuhr permanent im geöffneten Zustand verbleiben, um das Stellelement in seiner ausgelenkten Position zu halten. Ein elektromagnetisches Hubankerventil benötigt im betätigten Zustand z. B. Halteleistungen um 1 W.

Aus der WO-A-94/04832 ist eine Ventilanordnung mit einer Druckkammer, einem als Mikroventil ausgebildeten Einlaßventil und einem als Mikroventil ausgebildeten Auslaßventil bekannt, wobei die Druckkammer eine Verbindung zu einem durch Druck veränderbaren Stellelement bildet. Die Mikroventile dieser Ventilanordnung können jedoch den geschlossenen Zustand nicht leistungslos halten, so daß auch hier ständiger Energieverbrauch auftritt.

Aufgabe der vorliegenden Erfindung ist es, eine Ventilanordnung anzugeben, die nur für den Umschaltvorgang von einem Zustand in den anderen Energie verbraucht und den gewählten Zustand leistungslos halten kann.

Die Aufgabe wird erfindungsgemäß mit dem Gegenstand des Anspruchs 1 gelöst. Besondere Ausgestaltungen der Ventilanordnung sind in den abhängigen Ansprüchen angegeben.

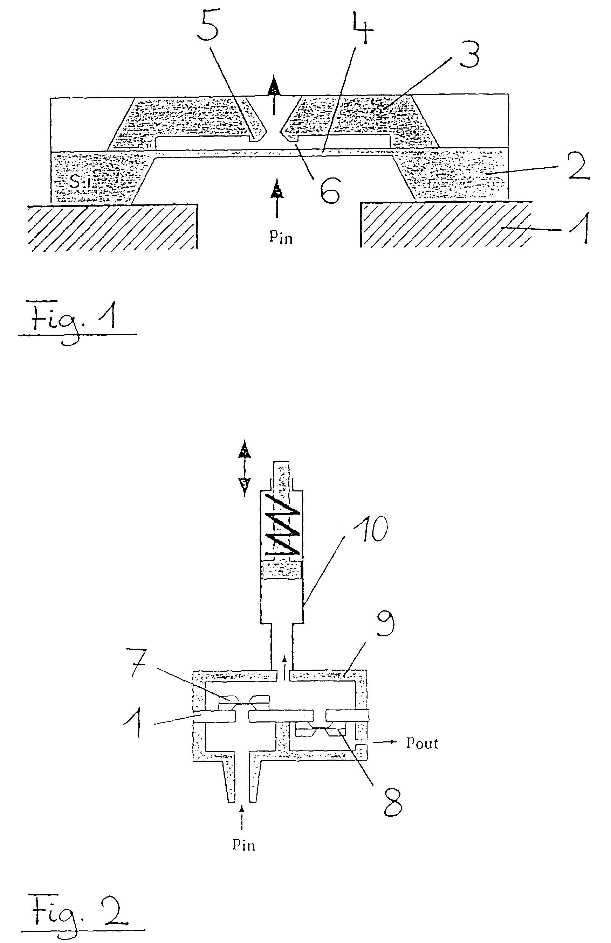

Die erfindungsgemäße Ventilanordnung besteht aus einer Kammer mit mindestens 2 Ventilen, einem Einlaßventil und einem Auslaßventil. Mit dem Einlaßventil wird der Zufluß eines Druckmittels (z. B. eines Gases) zu einem mit der Kammer verbundenen Stellelement geregelt. Das Stellelement kann beispielsweise ein Kolben sein, der durch den anliegenden Druck bewegt wird. Das Auslaßventil steuert den Abfluß des Druckmittels vom Stellelement, das dadurch wieder in seine Ausgangslage zurückkehrt.
Die Ventilanordnung zeichnet sich dadurch aus, daß das Einlaßventil ein Mikroventil mit Ventilsitz und Schließglied ist, das neben einer offenen und einer geschlossenen Schaltstellung auch eine davon abweichende Ruhestellung einnehmen kann. Während die offene und geschlossene Stellung des Ventils durch externe Mittel (z.B. Druck, Temperatur, elektrische Spannung usw.) geschaltet werden, nimmt das Schließglied (z.B. eine Membran) die Ruhestellung dann ein, wenn keine externen Mittel einwirken, d.h. wenn es weder in der offenen noch in der geschlossenen Schaltstellung gehalten wird. Als externes Mittel in diesem Sinne ist auch eine am Ventil anliegende Druckdifferenz zu verstehen, die einen bestimmten Mindestbetrag überschreitet. Beide Ventile sind so ausgestaltet, daß sie durch eine anliegende Druckdifferenz in geschlossenem Zustand gehalten werden (vgl. z.B. das Ventil aus Figur 1). In der Ruhestellung besteht ein Spalt zwischen Ventilsitz und Schließglied, der so dimensioniert ist, daß Leckströme am Stellelement oder an anderen Teilen der Anordnung durch über den Spalt nachströmendes Druckmittel ausgeglichen wird. Die Spaltbreite kann gemäß Anspruch 2 so klein gewählt werden, daß das Schließglied bei einer vorgegebenen (kritischen) Druckdifferenz am Ventil durch den resultierenden Druckmittelfluß aufgrund des aerodynamischen Effektes gegen den Ventilsitz gepreßt wird, also selbsttätig schließt (geschlossene Stellung).
Der Spalt läßt sich unter Ausnutzung der spezifischen Fertigungs- und Aufbautechniken der Siliziumtechnologie bei der Herstellung des Mikroventils sehr einfach und reproduzierbar erzeugen (z.B. durch Trockenätzen). Die Spaltbreite kann beispielsweise zwischen 10 und 100 µm betragen.

Selbstverständlich ist es auch möglich, mehrere Einlaßventile der genannten Art oder mehrere Auslaßventile nebeneinander in der Ventilanordnung einzusetzen. Ebenso sind Ventile mit mehreren Ventilsitzen und Schließgliedern verwendbar. Die Ventilanordnung hat aufgrund ihrer Wirkungsweise die Eigenschaften eines bistabilen 3/2-Wegeventils (im folgenden auch als Schalter bezeichnet) mit zwei Schaltpositionen. In der ersten Schaltposition ist das Auslaßventil geschlossen und das Einlaßventil geöffnet oder in Ruhestellung. In der zweiten Schaltposition ist das Einlaßventil geschlossen und das Auslaßventil geöffnet oder in Ruhestellung.

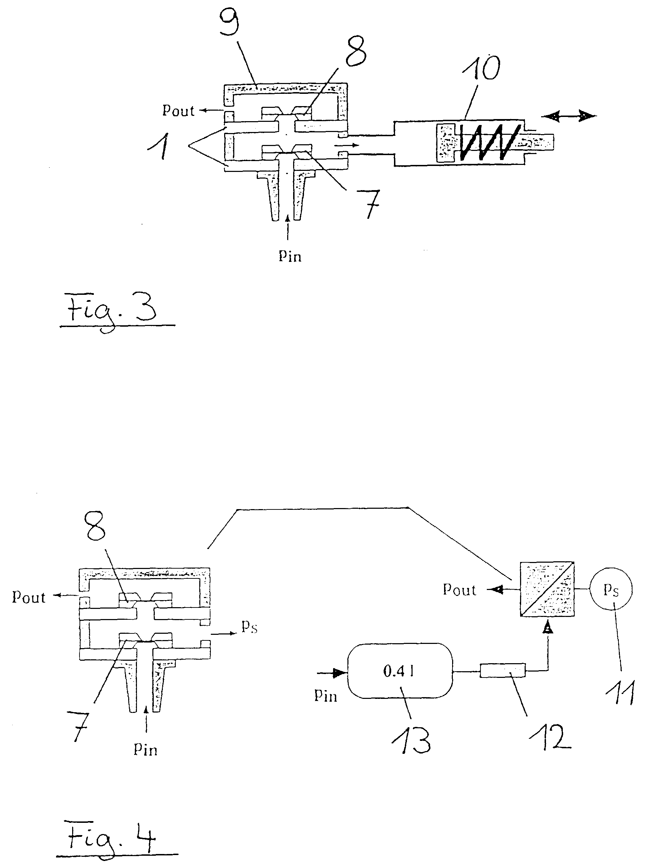

In der besonderen Ausgestaltungsform nach Anspruch 3 ist auch das Auslaßventil ein Mikroventil mit einer gesonderten Ruhestellung.
Anhand dieser Ausführungsform wird im folgenden die Wirkungsweise der Ventilanordnung für die Bewegung eines Kolbens als Stellelement erläutert (vgl. hierzu Figuren 2 und 3).
Wird das Einlaßventil (7) kurzzeitig angesteuert (geöffnet), füllt sich das Volumen am Kolben (10) mit Druckmittel, beispielsweise Gas, so daß der Kolben aus seiner Ausgangsposition bewegt wird. Das Schließglied des Auslaßventils (8) (Entlüftungsventil) wird gegen den Ventilsitz gedrückt, d.h. das Auslaßventil wird geschlossen (aufgrund der Druckdifferenz am Auslaßventil). Es fließt so lange Gas über das Einlaßventil, bis der Eingangsdruck pᵢₙ erreicht ist. Dabei baut sich die Druckdifferenz über dem Einlaßventil ab. Das Einlaßventil kann nun abgeschaltet werden. Da ein Druckabfall an diesem Ventil fehlt, liegt das Schließglied nicht auf dem Ventilsitz auf, d.h. es befindet sich in der Ruhestellung. Leckströme am Kolben können durch über den Spalt nachströmendes Gas kompensiert werden. Das Auslaßventil wird durch die anliegende Druckdifferenz geschlossen gehalten (pᵢₙ>pₒᵤₜ).
Das Volumen am Kolben (10) wird durch kurzzeitiges Ansteuern des Auslaßventils (8) entlüftet. Dadurch entsteht eine Druckdifferenz über dem Einlaßventil (7), dessen Schließglied durch das nachströmende Gas gegen den Ventilsitz gedrückt, also selbsttätig geschlossen wird. Das Volumen am Kolben entleert sich bis auf den Druck pₒᵤₜ. Der Kolben geht in die Ruhestellung zurück. Das Auslaßventil kann ausgeschaltet werden, da nun kein Druck mehr an diesem Ventil anliegt (Ruhestellung). Eventuell auftretende Leckströme der Anordnung werden über den entsprechend dimensionierten Spalt des Auslaßventils ausgeglichen. Das Einlaßventil wird durch die anliegende Druckdifferenz geschlossen gehalten. Das Schließen des Ein- oder Auslaßventils kann selbstverständlich auch durch andere externe Mittel durch gezieltes Ansteuern bewirkt werden. Das Antriebsprinzip der eingesetzten Ventile spielt für die erfindungsgemäße Funktion der Ventilanordnung keine Rolle. So können beispielsweise Ventile mit magnetischem, piezoelektrischem oder thermomechanischem Antriebsprinzip eingesetzt werden.

Die erfindungsgemäße Ventilanordnung verbraucht nur für den Umschaltvorgang zwischen beiden Schaltpositionen Energie und kann den jeweils eingenommenen Schaltzustand leistungslos halten. Ein Druckmittelverlust am Stellelement wird im (leistungslosen) Ruhezustand des Einlaßventils in vorteilhafter Weise durch über den Spalt nachströmendes Druckmittel ausgeglichen. Der besondere Vorteil der Ventilanordnung liegt daher im geringen Energieverbrauch, der insbesondere beim Einsatz in pneumatischen Steuerungen von erheblicher Bedeutung ist.

Sind gemäß Anspruch 3 in Verbindung mit Anspruch 4 Ein- und Auslaßventile vergleichbar ausgebildet, so läßt sich zudem ein Umschalten zwischen beiden Schaltpositionen allein durch Ansteuerung eines der beiden Ventile bewirken. Ein weiterer Energieaufwand ist hierbei nicht nötig.

Ausführungsformen der erfindungsgemäßen Ventilanordnung werden im folgenden anhand der Zeichnungen und Ausführungsbeispiele näher erläutert.

Dabei zeigen:
- Figur 1: ein Beispiel für den schematischen Aufbau eines Mikroventils, wie es als Einlaßventil in der erfindungsgemäßen Ventilanordnung eingesetzt wird,
- Figur 2: ein Beipiel für eine erfindungsgemäße Ventilanordnung,
- Figur 3: ein weiteres Beispiel für eine erfindungsgemäße Ventilanordnung,
- Figur 4: die schematische Darstellung eines Meßaufbaus zum Vermessen der Zeitkonstanten der Ventilanordnung,
- Figur 5: ein Ergebnis der Messung,
- Figur 6: eine Meßkurve für das Öffnen des Einlaßventils, und
- Figur 7: eine Meßkurve für das Öffnen des Auslaßventils.

In Figur 1 ist schematisch ein Mikroventil dargestellt, das als Einlaßventil in der erfindungsgemäßen Ventilanordnung geeignet ist. Das Mikroventil, das auf einem Chipträger (1), z.B. aus Keramik, aufgebracht ist, besteht in diesem Beispiel aus einem Siliziumsubstrat (2), das mit einem zweiten Siliziumkörper (3) verbunden ist (z.B. durch Bonden). Das Siliziumsubstrat (2) weist eine Membran (4) als Schließkörper auf, der dem um eine Durchgangsöffnung (Ventilöffnung) des zweiten Substratkörpers (3) gebildeten Ventilsitz (5) gegenüberliegt. Zwischen Membran (4) und Ventilsitz (5) wird bei der Herstellung des Ventils ein Spalt (6) erzeugt (z.B. durch Trockenätzen). Der Spalt kann so dimensioniert werden, daß die Membran durch eine geringe Druckdifferenz am Ventil gegen den Ventilsitz gepreßt wird. Das Ventil ist dann geschlossen. Es wird durch eine anliegende Druckdifferenz (pᵢₙ>pₒᵤₜ) in geschlossenem Zustand gehalten. Beim Ansteuern des Ventils (zum Öffnen) hebt sich die Membran gegen den anliegenden Druck pᵢₙ vom Ventilsitz ab. Dabei wird die Ventilöffnung freigegeben. Der Antrieb kann auf verschiedene Art erfolgen, so z.B. magnetisch, piezoelektrisch oder thermomechanisch.

Ein Beipiel für eine erfindungsgemäße Ventilanordnung ist in Figur 2 dargestellt. Einlaßventil (7) und Entlüftungsventil (8) sind hier auf einem gemeinsamen Chipträger (1) montiert. Der Chipträger befindet sich in einem Gehäuse (9), das einen Einlaßkanal (Druck pᵢₙ) und einen Auslaßkanal (Druck pₒᵤₜ) bildet. Mit dem Gehäuse ist ein Miniaturkolben (10) verbunden. Der Miniaturkolben (10) wird gegen die Kraft einer Rückstellfeder durch den Druck pᵢₙ nach oben bewegt, sobald das Einlaßventil (7) geöffnet wird (Entlüftungsventil geschlossen). Nach Erreichen des Druckes pᵢₙ am Kolben nimmt das Einlaßventil durch Abschalten der Ansteuerung zum Öffnen des Ventils seine Ruhestellung ein. Die Leckrate des Kolbens oder des Gehäuses wird durch den Gasfluß ausgeglichen, der über den Spalt des Einlaßventils nachströmt. Auf diese Weise wird ein Druckverlust am Stellelement verhindert.
Nach Schließen des Einlaßventils und Öffnen des Entlüftungsventils (8) entleert sich das Volumen am Kolben bis auf den Druck pₒᵤₜ (pᵢₙ>pₒᵤₜ), so daß der Kolben durch die Feder in seine Ausgangsposition zurückgestellt wird.
Das Stellelement könnte natürlich auch direkt in das obere Gehäuseteil integriert werden. Ebenso kann die Ansteuerung für die Ventile direkt auf dem Chipträger angeordnet sein. In einer weiteren Ausführungsform (Anspruch 8) können auch beide Ventile in einem gemeinsamen Chip integriert sein.

Figur 3 zeigt ein weiteres Beipiel für die erfindungsgemäße Ventilanordnung. Die Anordnung arbeitet in der bereits bei Figur 2 beschriebenen Weise. Bei dieser Ausführungsform sind Ein- und Auslaßventil auf unterschiedlichen Chipträgern (1) montiert, die in einem Gehäuse (9) übereinander angeordnet sind. Das Stellelement (10) ist seitlich am Gehäuse angebracht.
Die erfindungsgemäße Ventilanordnung weist in diesem Ausführungsbeispiel Mikroventile auf, die nach einem kombinierten thermomechanisch thermopneumatischen Wirkungsprinzip arbeiten, wie beispielsweise in der DE 44 18 450 beschrieben. Die eingestellte Spaltbreite beträgt in diesem Beispiel ca. 30 µm. Die gesamte Ventilanordnung hat Abmessungen von ca. 10 x 10 x 7 mm³. Aufgrund der Volumina der Ventilanordnung des Kolbens sind die Schaltzeiten sehr kurz.

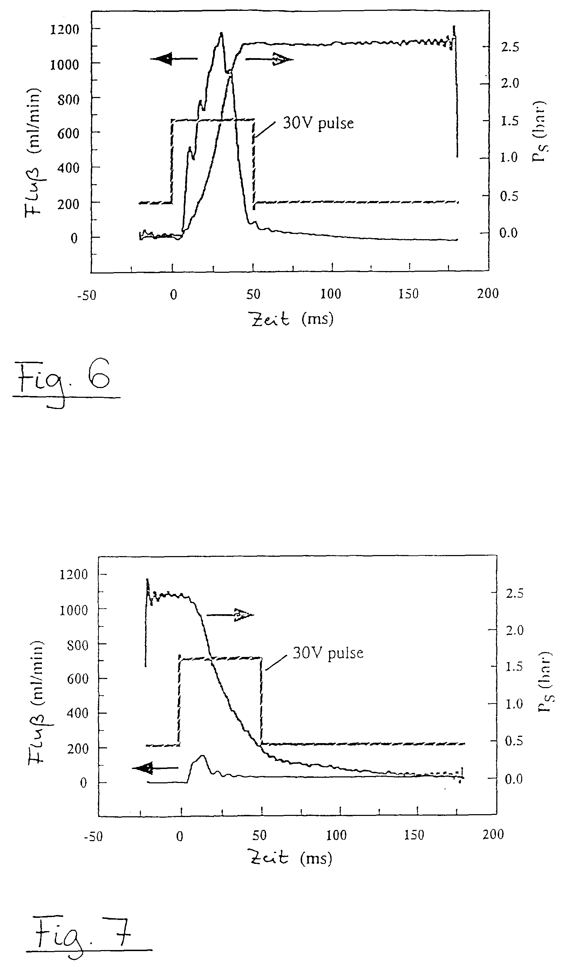

Figur 4 zeigt den Aufbau einer Meßanordnung, mit der das dynamische Verhalten des bistabilen Schalters untersucht wurde. Anstelle des Miniaturkolbens wurde ein temperaturkompensierter Siliziumdrucksensor (11) angeschlossen. Mit einem Siliziumdurchflußsensor (12) wurde der Gasfluß beim Schalten gemessen (Verzögerung 3 ms). Um Oszillationen in der Zuleitung zu verringern, ist ein 0,4 Liter großer Druckspeicher (13) vor den Durchflußsensor geschaltet.

In Figur 5 sind die entsprechenden Meßwerte für unterschiedliche Eingangsdrücke pᵢₙ dargestellt. Tₒₙ entspricht der Zeitspanne bis zum Erreichen von 90% des Wertes von pᵢₙ am Drucksensor (11) (Druck pₛ). T_{off} ist dementsprechend die Zeit bis pₛ auf 10% von pᵢₙ gefallen ist. Die Dauer des Anteuerungsimpulses (Impuls) zum Öffnen der Ventile liegt in diesem Beispiel zwischen 30 und 100 ms.

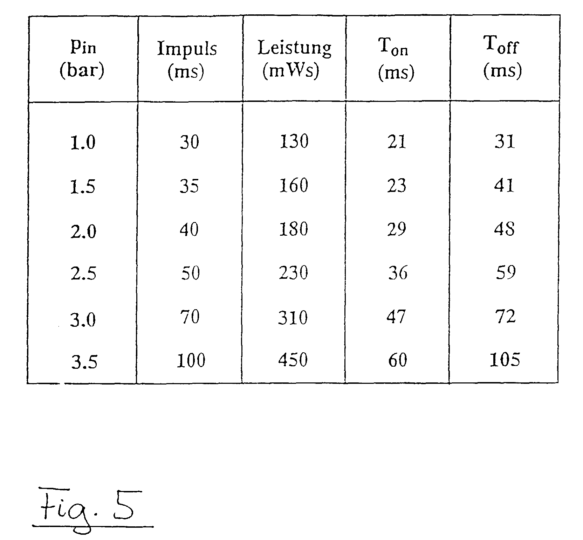

Die Figuren 6 und 7 zeigen Meßkurven für 2,5 bar Eingangsdruck pᵢₙ, die die in den vorangegangenen Absätzen beschriebenen Schaltvorgänge unterstreichen.

Figur 6 zeigt den Gasfluß durch den Durchflußsensor bzw. den Druckanstieg am Drucksensor (pₛ) bei Ansteuern des Einlaßventils für 50 ms bei einer Leistung von 4,5 W und einem Eingangsdruck von 2,5 bar.

Figur 7 zeigt den Gasfluß durch den Durchflußsensor bzw. den Druckabfall am Drucksensor (pₛ) beim Ansteuern des Entlüftungsventils für 50 ms bei einer Leistung von 4,5 W und einem Eingangsdruck von 2,5 bar. Der kurze Gasfluß, der in Figur 7 zu erkennen ist, dokumentiert das Schließen des Eingangsventils (7) durch den bei Ansteuern des Entlüftungsventils (8) im Schalter entstehenden Druckabfall. Entscheidend für die Schaltzeiten sind die Volumina von Schalter und Stellelement. Die Bistabilität des Schalters kommt in den Meßkurven der Abbildungen 6 und 7 deutlich zum Ausdruck. Ist der elektrische Impuls zu kurz, reduziert sich der Druck nach einer gewissen Zeit auf den Ausgangswert.
Pro Schaltzyklus (ein und aus) wird ca. 1 cm³ Gas verbraucht. Als Arbeitsgas kann neben N₂ z.B. auch CO₂ verwendet werden, das in kleinen Gaspatronen erhältlich ist. Der effektive Verbrauch an elektrischer Energie ist gering. Die erzielbaren Kräfte und Stellwege sind hoch.

Unter Verwendung einer derartigen Ventilanordnung könnte beispielsweise ein Mikroanalysesystem auf der Basis von Si-Wafern aufgebaut werden. Mit den Sensorelementen müssen nur passive Strukturen in das Analysesystem integriert werden. Die aktiven Elemente (Antrieb für Ventile und Pumpen) können hybrid aufgebracht werden. Einerseits ist der Antrieb somit mediengetrennt. Andererseits läßt sich das Analysesystem, das aufgrund der Strukturen im pm-Bereich anfällig gegen Verschmutzung z.B. durch die Proben ist, verhältnismäßig einfach auswechseln. Es ist daher relativ preiswert.

## Patentansprüche

1. Ventilanordnung mit einem Mikroventil (7) an einer Einlaßöffnung und einem weiteren Ventil (8) an einer Auslaßöffnung einer Kammer, die eine Verbindung zu einem durch Druck veränderbaren Stellelement (10) bildet,
**dadurch gekennzeichnet,**
daß beide Ventile so ausgestaltet sind, daß sie durch eine anliegende Druckdifferenz in geschlossenem Zustand gehalten werden, und das Mikroventil zumindest einen Ventilsitz (5) und ein bewegliches Schließglied (4) mit einer offenen Schaltstellung, einer geschlossenen Schaltstellung und einer davon abweichenden Ruhestellung aufweist, die das Mikroventil einnimmt, wenn es weder in der offenen noch in der geschlossenen Schaltstellung gehalten wird, und in der zwischen Ventilsitz (5) und Schließglied (4) ein Spalt (6) geöffnet ist, der so dimensioniert ist, daß ein Druckmittelverlust in der Kammer aufgrund einer Leckrate durch über den Spalt (6) nachströmendes Druckmittel ausgeglichen wird.

2. Ventilanordnung nach Anspruch 1,
**dadurch gekennzeichnet,**
daß der Spalt (6) so dimensioniert ist, daß das Schließglied (4) bei Erreichen einer vorgegebenen Druckdifferenz am Mikroventil selbsttätig schließt.

3. Ventilanordnung nach einem der Ansprüche 1 oder 2,
**dadurch gekennzeichnet,**
daß das weitere Ventil (8) ein Mikroventil ist, das zumindest einen Ventilsitz (5) und ein bewegliches Schließglied (4) mit einer offenen Schaltstellung, einer geschlossenen Schaltstellung und einer davon abweichenden Ruhestellung aufweist, die das Mikroventil einnimmt, wenn es weder in der offenen noch in der geschlossenen Schaltstellung gehalten wird, und in der zwischen Ventilsitz (5) und Schließglied (4) ein Spalt (6) geöffnet ist, der so dimensioniert ist, daß das Schließglied (4) bei Erreichen einer vorgegebenen Druckdifferenz am Ventil selbsttätig schließt.

4. Ventilanordnung nach einem der Ansprüche 1 bis 3,
**dadurch gekennzeichnet,**
daß das Mikroventil so ausgestaltet ist, daß das Schließglied (4) mit magnetischen, piezoelektrischen oder thermomechanischen Mitteln in die offene Schaltstellung schaltbar ist.

5. Ventilanordnung nach einem der Ansprüche 1 bis 4,
**dadurch gekennzeichnet,**
daß die Ventile nebeneinander auf einem gemeinsamen Chipträger (1) in der Kammer angeordnet sind.

6. Ventilanordnung nach einem der Ansprüche 1 bis 4,
**dadurch gekennzeichnet,**
daß die Ventile auf getrennten Chipträgern (1) übereinander in der Kammer angeordnet sind.

7. Ventilanordnung nach einem der Ansprüche 5 oder 6,
**dadurch gekennzeichnet,**
daß die Ventilansteuerung auf dem Chipträger (1) integriert ist.

8. Ventilanordnung nach einem der Ansprüche 1 bis 4,
**dadurch gekennzeichnet,**
daß die Ventile in einem gemeinsamen Chip integriert sind.

## Claims

1. Valve arrangement with a microvalve (7) at an inlet aperture and a further valve (8) at an outlet aperture of a chamber which forms a connection to an adjusting element (10) which may be altered by pressure,
**characterised in that**
both valves are so designed that they are kept in the closed state by pressure difference which is present and the microvalve has at least one valve seat (5) and a movable closing member (4) with an open switch position, a closed switch position and a rest position which is different from the former, and which the microvalve assumes if it is held neither in the open nor in the closed switch position, and in which a gap (6) is opened between valve seat (5) and closing member (4), which gap is of such dimensions that loss of pressure in the chamber on the basis of a leakage rate is compensated for by pressure medium subsequently flowing via the gap (6).

2. Valve arrangement according to claim 1,
**characterised in that**
the gap (6) is of such dimensions that the closing member (4) closes automatically once a pre-set pressure difference at the microvalve has been reached.

3. Valve arrangement according to one of claims 1 or 2,
**characterised in that**
the additional valve (8) is a microvalve which has at least one valve seat (5) and a movable closing member (4) with an open switch position, a closed switch position and a rest position different from the former and which the microvalve assumes if it is held neither in the open nor in the closed position, and in which a gap (6) is opened between valve seat (5) and closing member (4), which gap is of such dimensions that the closing member (4) closes automatically when a pre-set pressure difference on the valve is reached.

4. Valve arrangement according to one of claims 1 to 3,
**characterised in that**
the microvalve is so designed that the closing member (4) may be switched by magnetic, piezoelectric or thermomechanical means into the open switch position.

5. Valve arrangement according to one of claims 1 to 4,
**characterised in that**
the valves are arranged one beside the other on a common chip carrier (1) in the chamber.

6. Valve arrangement according to one of claims 1 to 4,
**characterised in that**
the valves are arranged on separate chip carriers (1) one above the other in the chamber.

7. Valve arrangement according to one of claims 5 or 6,
**characterised in that**
the valve arrangement is integrated in the chip carrier (1).

8. Valve arrangement according to one of claims 1 to 4,
**characterised in that**
the valves are integrated in a common chip.

## Revendications

1. Système de soupapes qui comprend une microsoupape (7) sur un orifice d'admission et une autre soupape (8) sur un orifice d'échappement d'une chambre, qui forme une liaison avec un élément de réglage (10) modifiable en fonction d'une pression,
caractérisé en ce que
les deux soupapes sont constituées d'une manière telle qu'elles sont maintenues par l'application d'une différence de pression en position fermée, et que la microsoupape présente au moins un siège de soupape (5) et un organe de réglage mobile (4) avec une position de commande ouverte, une position de commande fermée et une position de repos, qui s'écarte de celles-ci, que prend la microsoupape quand elle n'est maintenue ni dans la position de commande ouverte ni dans la position de commande fermée, et dans lequel une fente (6) comprise entre le siège de la soupape (5) et l'organe d'obturation (4) est ouverte, fente qui a une dimension telle qu'une perte d'agent sous pression dans la chambre due à un taux de fuite est compensée par de l'agent sous pression s'écoulant après coup par la fente (6).

2. Système de soupapes selon la revendication 1,
caractérisé en ce que
la fente (6) a une dimension telle que l'organe d'obturation (4) se ferme automatiquement quand est atteinte une différence de pression prédéfinie sur la microsoupape.

3. Système de soupapes selon l'une des revendications 1 ou 2,
caractérisé en ce que
l'autre soupape (8) est une microsoupape, qui présente au moins un siège de soupape (5) et un organe mobile d'obturation (4) avec une position de commande ouverte, une position de commande fermée et une position de repos s'écartant de celles-ci, que prend la microsoupape, quand elle n'est maintenue ni dans la position de commande ouverte ni dans la position de commande fermée, et dans lequel entre le siège de soupape (5) et l'organe d'obturation (4) est ouverte une fente (6) qui a une dimension telle que l'organe d'obturation (4) se ferme automatiquement quand est atteinte une différence de pression prédéterminée sur la soupape.

4. Système de soupapes selon l'une des revendications 1 à 3,
caractérisé en ce que
la microsoupape est constituée de telle façon que l'organe d'obturation (4) puisse être commandé par des moyens magnétiques, piézo-électriques ou thermomécaniques dans la position de commande ouverte.

5. Système de soupapes selon l'une des revendications 1 à 4,
caractérisé en ce que
les soupapes sont disposées les unes à coté des autres sur un support de puce commun (1) dans la chambre.

6. Système de soupapes selon l'une des revendications 1 à 4,
caractérisé en ce que
les soupapes sont disposées les unes au dessus des autres sur des supports de puce séparés (1) dans la chambre.

7. Système de soupapes selon l'une des revendications 5 ou 6,
caractérisé en ce que
la commande des soupapes est intégrée sur le support de puce (1).

8. Système de soupapes selon l'une des revendications 1 à 4,
caractérisé en ce que
les soupapes sont intégrées dans une puce commune.
